# EUROPÄISCHE PATENTSCHRIFT

(11) **EP 1 081 296 B1**
(45) Veröffentlichungstag und Bekanntmachung des Hinweises auf die Patenterteilung: **14.07.2004**
(21) Anmeldenummer: 00115891.4
(22) Anmeldetag: 25.07.2000
(51) Int. Cl.: E03C 1/04

(54) **Sanitärarmatur**
Sanitary fitting
Robinetterie sanitaire

(30) Priorität: 02.09.1999 DE 19941820
(43) Veröffentlichungstag der Anmeldung: 07.03.2001
(73) Patentinhaber: HANSA METALLWERKE AG, 70567 Stuttgart (DE)
(72) Erfinder: Schmid, Lars, 72622 Nürtingen (DE); Säuerle, Peter, 70567 Stuttgart (DE)
(74) Vertreter: Ostertag, Ulrich, Dr.

(56) Entgegenhaltungen:
- DE-A- 3 509 310
- DE-A- 4 040 569
- GB-A- 1 367 721

## Beschreibung

Die Erfindung betrifft eine Sanitärarmatur mit
a) einem Gehäuse;
b) einem Wasserauslauf, der schwenkbar an dem Gehäuse montiert ist,
c) einer Steckverbindung, mittels welcher der Wasserauslauf und das Gehäuse im Endbereich des Wasserauslaufs zueinander schwenkbar ineinandergesteckt sind, und die aufweist:
   ca) einen Steckzapfen mit rotationssymmetrischer Außenkontur;
   cb) eine den Steckzapfen umgreifende Zapfenaufnahme;
   cc) eine spielausgleichende Einrichtung, die zumindest bereichsweise radial zwischen dem Steckzapfen und einem die Zapfenaufnahme enthaltenden Teil angeordnet ist;
   cd) ein Fixierelement, insbesondere eine Schraube, das durch eine radiale Öffnung in dem die Zapfenaufnahme enthaltenden Teil radial beweglich geführt ist;
   wobei
d) der Steckzapfen und das die Zapfenaufnahme enthaltende Teil durch eine bezüglich der Achse der Steckverbindung radiale Kraftwirkung des Fixierelements auf eine Fläche der spielausgleichenden Einrichtung radial im wesentlichen spielfrei zueinander gelagert werden; und
e) die Steckverbindung einen Anschlag aufweist, der eine definierte axiale Steckposition des Steckzapfens in der Zapfenaufnahme vorgibt.

Eine derartige Sanitärarmatur ist aus der GB 1 367 721 A bekannt. Das Fixierelement ist dort eine Schraube, die radial in das Gehäuse einer Sanitärarmatur eingeschraubt ist und auf eine Fassung für einen in das Gehäuse eingesteckten Wasserauslauf drückt. Durch diese radiale Kraftwirkung wird das radiale Spiel des Wasserauslaufs im Gehäuse reduziert.

Nachteilig ist bei einer derartigen bekannten Sanitärarmatur, daß ein aufgrund von Fertigungstoleranzen vorliegendes axiales Spiel des Wasserauslaufs im Gehäuse nicht kompensiert wird. Beim Verschwenken des Wasserauslaufs oder auch durch eine Änderung des Wasserdrucks bei der Wasserentnahme führt dies zu einem spür- bzw. sichtbaren Wackeln oder Nicken des Wasserauslaufs im Gehäuse. Bedingt durch möglichen Verschleiß der Führungsflächen der Schwenkaufnahme kann ein derartiges Wackeln bzw. Nicken während der Gebrauchsdauer der Sanitärarmatur noch zunehmen. Eine derartige Beweglichkeit wird jedoch vom Benutzer als Zeichen geringer Qualität der Sanitärarmatur verstanden und ist daher unbedingt zu vermeiden.

Es ist daher die Aufgabe der vorliegenden Erfindung, eine Sanitärarmatur der eingangs genannten Art derart weiterzubilden, daß der Wasserauslauf im Gehäuse nach allen Richtungen im wesentlichen spielfrei gelagert ist.

Diese Aufgabe wird erfindungsgemäß dadurch gelöst, daß
f) die spielausgleichende Einrichtung mindestens einen zur Achse der Steckverbindung geneigten Flächenbereich aufweist, der so mit dem Steckzapfen und dem Fixierelement zusammenwirkt, daß durch die radiale Kraftwirkung des Fixierelements, die auf den mindestens einen Flächenbereich wirkt, der Steckzapfen gegen den Anschlag gespannt wird und der Steckzapfen und das die Zapfenaufnahme enthaltende Teil axial im wesentlichen spielfrei zueinander gelagert werden.

Das Fixierelement, das, wie beim Stand der Technik, zum radialen Spielausgleich vorgesehen ist, erfüllt nun gleichzeitig auch den Zweck des axialen Spielausgleichs. Dadurch wird eine sowohl radial als auch axial im wesentlichen spielfreie und damit solide anmutende Schwenkverbindung des Wasserauslaufs mit dem Gehäuse der Sanitärarmatur geschaffen. Zusätzlich wird der mechanische Verschleiß an dichtenden Teilen verringert, da eine einseitige Belastung durch Kippen des Wasserauslaufs nicht mehr vorkommen kann. Die spielausgleichende Einrichtung kann an der Sanitärarmatur vormontiert sein, so daß kein zusätzlicher Aufwand bei der Endmontage der Sanitärarmatur anfällt.

Der Anschlag kann durch eine radial vorspringende Stufe am Steckzapfen gebildet werden, die an einer Gegenfläche des die Zapfenaufnahme enthaltenden Teils anliegt. Ein derartiger Anschlag gewährleistet eine relativ große Auflagefläche des Steckzapfens am die Zapfenaufnahme enthaltenden Teil, was zusätzlich zur Stabilität der Lagerung des Wasserauslaufs im Gehäuse der Sanitärarmatur beiträgt.

Bevorzugt umfaßt der geneigte Flächenbereich einen Flächenbereich innerhalb einer Aufnahme der spielausgleichenden Einrichtung für das Fixierelement. Die radiale Kraftwirkung des Fixierelements wird auf diese Weise besonders effizient in eine radiale und eine axiale Kraftkomponente umgesetzt, die jeweils für den radialen bzw. axialen Spielausgleich sorgen.

Dabei ist die Aufnahme vorzugsweise eine Bohrung mit konischer Bodenfläche, der geneigte Flächenbereich der spielausgleichenden Einrichtung ist Teil der konischen Bodenfläche und die Achse der Aufnahme ist gegenüber dem Endabschnitt des Fixierelements bezogen auf die Achse der Steckverbindung axial versetzt. Der die Umsetzung der radialen Kraftwirkung des Fixierelements in eine axiale und eine radiale Kraftkomponente bewirkende geneigte Flächenbereich wird somit durch einen Achsversatz zwischen zwei konisch zulaufenden Flächenbereichen gebildet. Dieser Achsversatz führt dazu, daß der Endabschnitt des Fixierelements an einem geneigten Flächenbereich der konischen Bodenfläche anliegt, wodurch eine Umsetzung der radialen Kraftwirkung des Fixierelements in eine axiale und eine radiale Kraftkomponente bewirkt wird. Eine derartige konische Bodenfläche läßt sich maschinell einfach fertigen.

Die spielausgleichende Einrichtung kann eine ringförmige Grundform haben und zwei Halbschalen umfassen. Eine derartige spielausgleichende Einrichtung dient außerdem zur zumindest radialen Lagerung des Wasserauslaufs und ist aufgrund ihrer Zweiteilung einfach an der Sanitärarmatur anbringbar.

Bevorzugt ist dabei mindestens eine sich in Umfangsrichtung der Halbschalen erstreckende verformbare Nocke vorgesehen, die an mindestens eine Halbschale angeformt ist. Über die Nocken liegen bei montierter Sanitärarmatur die beiden Halbschalen aneinander an. Die Nocken drücken sich durch die spielausgleichende Kraftwirkung des Fixierelements an die jeweils andere Halbschale und verformen sich dabei. Dies gewährleistet, daß die Halbschalen in Umfangsrichtung spielfrei aneinander anliegen und beim Verschwenken des Wasserauslaufs nicht ihrerseits eine unerwünschte Kippbewegung durchführen.

Die spielausgleichende Einrichtung kann einen sich radial erstreckenden Bund aufweisen, der im Bereich des Anschlags zwischen dem Steckzapfen und dem die Zapfenaufnahme enthaltenden Teil aufgenommen ist. Ein derartiger Bund dient zur axialen Lagerung des Wasserauslaufs am Gehäuse der Sanitärarmatur.

Der Bund kann dabei eine Mehrzahl von sich radial erstekkenden Lamellen-Segmenten aufweisen. Derartige Lamellen-Segmente gewährleisten eine Flexibilität der Halbschalen bei der Montage der spielausgleichenden Einrichtung an der Sanitärarmatur.

Bevorzugt weist die spielausgleichende Einrichtung mindestens ein Federelement auf, das sich am Steckzapfen bzw. dem die Zapfenaufnahme enthaltenden Teil axial abstützt. Durch das Federelement ist eine sichere axiale Verbindung der spielausgleichenden Einrichtung mit dem Wasserauslauf gegeben.

Dabei kann das Federelement mindestens eine einstückig an einem Grundkörper der spielausgleichenden Einrichtung angeformte Feder-Lamelle aufweisen. Eine derartige Feder-Lamelle ist eine besonders kostengünstige Ausführung des Federelements.

Für die Zuordnung von Steckzapfen und Zapfenaufnahme zu Sanitärarmatur-Komponenten gibt es zwei Alternativen:

Bei einer ersten Ausführungsform kann die Zapfenaufnahme im Gehäuse der Sanitärarmatur ausgebildet sein.

Alternativ kann die Zapfenaufnahme im Wasserauslauf der Sanitärarmatur ausgebildet sein.

Bei beiden Ausführungsformen kann die spielausgleichende Einrichtung vor der Endmontage der Sanitärarmatur am Gehäuse bzw. der Sanitärarmatur vormontiert sein, so daß sich kein zusätzlicher Montageaufwand ergibt.

Ausführungsbeispiele der Erfindung werden nachfolgend anhand der Zeichnung näher erläutert; es zeigen:
- Figur 1: einen Teilschnitt durch ein Gehäuse einer Sanitärarmatur und einen daran schwenkbar befestigten Wasserauslauf;
- Figur 2: eine Seitenansicht einer Lagerschalenhälfte, die Teil einer Steckverbindung des Wasserauslaufs am Gehäuse der Sanitärarmatur ist;
- Figur 3: einen Schnitt gemäß Linie III-III von Figur 2;
- Figur 4: einen Schnitt gemäß Linie IV-IV von Figur 2; und
- Figur 5: einen Teilschnitt durch ein Gehäuse einer Sanitärarmatur und einen daran schwenkbar befestigten Wasserauslauf einer alternativen Ausführungsform.

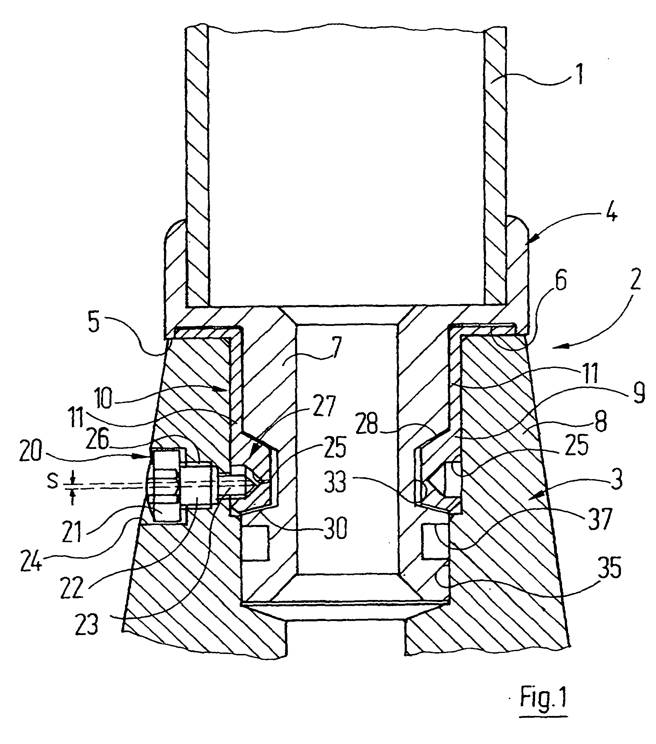

Die Schnittdarstellung von Figur 1 zeigt den unteren Abschnitt eines Wasserauslaufs 1, der über eine insgesamt mit dem Bezugszeichen 2 bezeichnete Steckverbindung schwenkbar mit einem teilweise dargestellten Gehäuse 3 einer Sanitärarmatur verbunden ist.

Die Steckverbindung 2 ist dabei wie folgt aufgebaut:

Der rohrförmige untere Abschnitt des Wasserauslaufs 1 ist in einen rotationssymmetrischen Anschlußstutzen 4 eingesteckt. Letzterer bildet eine axiale Fortsetzung des Wasserauslaufs 1 und verjüngt sich über eine rechtwinklige Umfangsstufe 5 radial nach innen. Die Umfangsstufe 5 weist eine ringförmige Ausnehmung 6 auf, deren Bedeutung später noch erläutert wird.

Der sich im Anschluß an die Umfangsstufe 5 axial fortsetzende Abschnitt 7 des Anschlußstutzens 4 bildet einen inneren Steckzapfen der Steckverbindung 2. Der innere Steckzapfen 7 ist in eine koaxiale rotationssymmetrische Aufnahme 35 des oberen Bereichs 8 des Gehäuses 3 bis zur einen Anschlag vorgebenden Umfangsstufe 5 eingesteckt. Die axiale Erstreckung der Aufnahme 35 ist dabei etwas größer als diejenige des eingesteckten Steckzapfens 7, so daß die Stirnseite des bis zum Anschlag an der Umfangsstufe 5 eingeschobenen Steckzapfens 7 nicht am Boden der Aufnahme 35 aufliegt.

Im unteren Bereich besitzt der Steckzapfen 7 eine Umfangsnut 37, in die ein Dichtelement (nicht dargestellt) einlegbar ist.

Zwischen dem Steckzapfen 7 und der Aufnahme 35 ist ein Raum 9 ausgespart. In diesem ist eine Lagerschale 10 aus Kunststoff angeordnet, die ebenfalls Teil der Steckverbindung 2 ist.

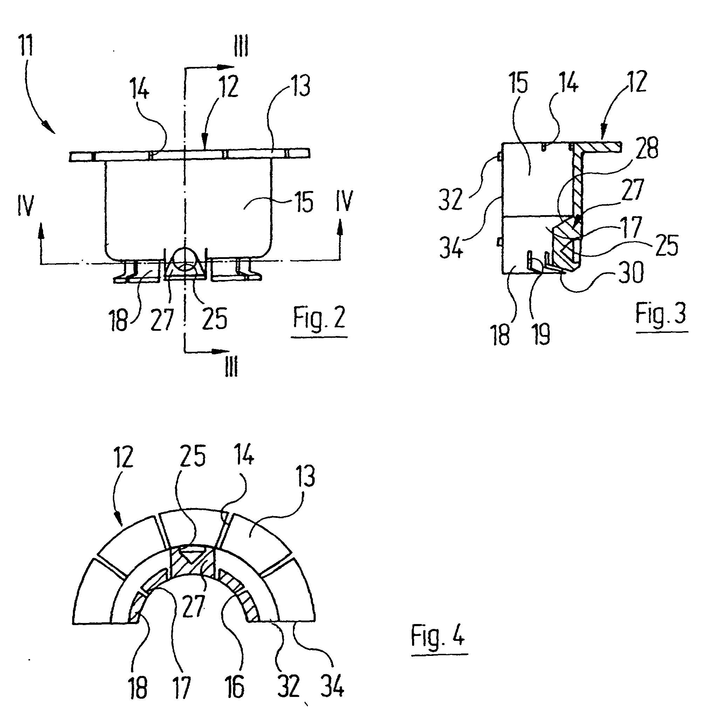

Die Lagerschale 10 ist aus zwei baugleichen Halbschalen 11 aufgebaut, von denen eine in den Figuren 2 bis 4 dargestellt ist. Bei der Beschreibung der Lagerschale 10 verwendete Lageangaben "axial" bzw. "radial" beziehen sich auf die Mittelachse der gesamten Lagerschale 10.

Die Halbschale 11 hat die Grundform der Hälfte einer axial mittig aufgeschnittenen Hülse. Obwohl im folgenden bei der Beschreibung der Halbschale 11 oft die Begriffe "Hälfte" bzw. "Halbkreis" verwendet werden, ist zu beachten, daß in Umfangsrichtung von der Halbschale 11 kein vollständiger Halbkreis, sondern ein Winkelbereich überstrichen wird, der etwas kleiner ist als 180°. Bei zusammengesetzten Halbschalen 11 verbleibt daher zwischen einander zugewandten Stirnflächen 34 der Halbschalen 11 jeweils ein schmaler Zwischenraum.

Der im eingebauten Zustand axial obere Abschnitt der Halbschale 11 wird von einem sich in einem Halbkreisbogen radial nach außen erstreckenden Bund 12 begrenzt. Letzterer ist aus fünf Lamellen-Segmenten 13 aufgebaut, zwischen denen sich radiale Zwischenräume 14 erstrecken.

Die Lamellen-Segmente 13 sind jeweils einstückig an einem der oben erwähnten Hülsenhälfte entsprechenden Grundkörper 15 der Halbschale 11 angeformt. An der dem Bund 12 axial gegenüberliegenden Seite ist der Grundkörper 15 radial nach innen umgebogen und begrenzt mit der umgebogenen Endfläche eine nahezu halbkreisförmige Öffnung 16.

An den die Öffnung 16 begrenzenden Wandbereich 17 des Grundkörpers 15 schließen sich einstückig vier in zwei Paaren halbkreisförmig angeordnete Feder-Lamellen 18 an. Diese erstrecken sich vom Wandbereich 17 aus zunächst in axialer Richtung und sind dann radial nach außen gebogen. Zwischen den einzelnen Feder-Lamellen 18 der beiden Paare verbleiben, ähnlich wie zwischen den Lamellen-Segmenten 13, Zwischenräume 19.

An einer der Stirnflächen 34, die den Grundkörper 15 in Umfangsrichtung abschließen, sind zwei Nocken 32, deren Funktion noch beschrieben wird, axial zueinander beabstandet einstückig am Grundkörper 15 angeformt.

Zur Fixierung der Steckverbindung 2 und zur Eliminierung von axialem und radialem Spiel des Steckzapfens 7 in der Aufnahme 35 bei montierter Sanitärarmatur ist eine Schraube 20 vorgesehen (vgl. Fig. 1). Diese weist einen Schraubenkopf 21, einen sich daran anschließenden Gewindeabschnitt 22 und einen sich wiederum daran anschließenden Stiftabschnitt 23 auf. Letzterer verjüngt sich an seinem dem Schraubenkopf 21 abgewandten Ende konisch. Die Schraube 20 ist in ein entsprechendes Gewinde 26 des Gehäuses 3 radial eingeschraubt, wobei der Schraubenkopf 21 in einer entsprechenden Aufnahme 24 des Gehäuses 3 versenkt ist.

Bei der in Fig. 1 dargestellten vollständig in das Gehäuse 3 eingeschraubten Position der Schraube 20 ragt das konische Ende des Stiftabschnitts 23 in eine Stiftaufnahme 25 der Halbschale 11. Der Boden der Stiftaufnahme 25 verjüngt sich ebenfalls konisch mit einem Konuswinkel, der demjenigen des konischen Abschlusses des Stiftabschnitts 23 entspricht. Der Durchmesser der Stiftaufnahme 25 ist größer als derjenige des Stiftabschnitts 23.

Die Mittelachse der Schraube 20 bzw. des Gewindes 26 ist um einen Abstand s gegenüber der Mittelachse der Stiftaufnahme 25 bezogen auf die Längsachse der Steckverbindung 2 axial nach unten versetzt.

Wie aus Figur 1 im Zusammenhang mit Figur 2 ersichtlich, befindet sich die Stiftaufnahme 25 in einem Aufnahmeabschnitt 27 der Halbschale 11. Der Aufnahmeabschnitt 27 ist an den dem Bund 12 gegenüberliegenden Endbereich des Grundkörpers 15 angeformt. Der Aufnahmeabschnitt 27 liegt dabei zwischen den beiden Paaren der Feder-Lamellen 18. Die radiale Außenwand des Aufnahmeabschnitts 27 bildet eine glatte Fortsetzung der Außenwand des Grundkörpers 15.

Ausgehend vom Wandbereich 17 vergrößert sich über eine radial schräg nach innen ragende Stufe 28 die Wandstärke des Aufnahmeabschnitts 27 nach innen. In diesem Bereich vergrößerter Wandstärke ist die Stiftaufnahme 25 als Ausnehmung ausgeführt. Die Stufe 28 liegt im eingebauten Zustand (vgl. Figur 1) in einer komplementär zum Querschnitt des Aufnahmeabschnitts 27 geformten ringförmigen Umfangsnut 33 des Anschlußstutzens 4 an.

Der ebenfalls schräg ausgeführte Boden 30 des Aufnahmeabschnitts 27, der ebenfalls in der Umfangsnut 33 anliegt, dient als axiales Gegenlager zur Stufe 28.

Die Montage des Wasserauslaufs 1 am Gehäuse 3 geschieht folgendermaßen:

Die Halbschalen 11 werden am Anschlußstutzen 4 vormontiert, indem jeweils der Bund 12 in die dafür vorgesehene Umfangsausnehmung 6 des Anschlußstutzens 4 eingeklipst wird, wobei der Aufnahmeabschnitt 27 in die Umfangsnut 33 eingreift. Die Beweglichkeit des Bundes 12 aufgrund der Zwischenräume 14 zwischen den Lamellen-Segmenten 13 gewährleistet die hierfür notwendige Flexibilität der Halbschalen 11. Die beiden Halbschalen 11 umgeben den Anschlußstutzen 4 ringförmig, wobei sie an den beiden Nahtstellen zwischen den Halbschalen 11 über die Nocken 32 aneinander anliegen.

Nun wird der mit den Halbschalen 11 vormontierte Anschlußstutzen 4, in dem seinerseits der Wasserauslauf 1 schon angebracht ist, in das Gehäuse 3 eingesteckt. Da die axiale Erstreckung der Aufnahme 35 des Gehäuses 3 größer ist als diejenige des Steckzapfens 7, liegt der Anschlußstutzen 4 mit der Umfangsstufe 5 über die Lamellen-Segmente 13 der Halbschalen 11 an der das Gehäuse 3 oben abschliessenden Stirnwand an. Die Umfangsstufe 5 bildet daher einen Anschlag für den Steckzapfen 7.

Der Eingriff des Aufnahmeabschnitts 27 in die komplementäre Umfangsnut 33 sowie die sich in der Umfangsnut 33 federnd abstützenden Feder-Lamellen 18 gewährleisten eine sichere, spielfreie axiale Verbindung der Halbschalen 11 mit dem Anschlußstutzen 4.

Nun wird die Schraube 20 radial von außen in das Gewinde 26 des Gehäuses 3 eingeschraubt. Dabei kommt das konische Ende des Stiftabschnitts 23 der Schraube 20 in Kontakt mit der entsprechend konisch zulaufenden Stiftaufnahme 25 der Halbschale 11. Da die Mittelachse der Schraube 20 zur Mittelachse der Stiftaufnahme 25 bezogen auf die Achse der Steckverbindung 2 um den Abstand s versetzt ist, wird die beim Einschrauben der Schraube 20 wirkende radiale Kraft des Stiftabschnitts 23 auf die Stiftaufnahme 25 über die aneinander anliegenden Schrägen des Stiftabschnitts 23 und der Stiftaufnahme 25 in eine axial nach unten auf die Halbschale 11 wirkende Kraftkomponente umgesetzt. Diese Kraft zieht die Halbschalen 11 und den mit diesen verbundenen Anschlußstutzen 4 nach unten, wobei ein eventuell vorhandenes axiales Spiel des Steckzapfens 7 in der Aufnahme 35 des Gehäuses 3 eliminert wird.

Gleichzeitig werden durch die radiale Kraftwirkung des Stiftabschnitts 23 auf die Stiftaufnahme 25 die beiden Halbschalen 11 gegeneinander gedrückt, wobei die Nocken 32 verformt werden.

Durch die, wie oben beschrieben, axial nach unten auf den Anschlußstutzen 4 wirkende Kraftkomponente und die über die Schraube 20 und die Nocken 32 radial wirkende Kraftkomponente wird auch die Halbschale 11, die der Schraube 20 gegenüberliegt, axial und radial spielfrei zum Steckzapfen 7 bzw. zum Gehäuse 3 positioniert.

Gegebenenfalls vorliegendes radiales Spiel des Steckzapfens 7 im Gehäuse 3 wird durch die über die Lagerschale 10 übertragene radiale Kraftwirkung der Schraube 20 auf den inneren Steckzapfen 7 eliminiert.

Beim Verschwenken des Wasserauslaufs 1 im Gehäuse 3 dreht sich der Anschlußstutzen 4, während die Lagerschale 10 bezogen auf das Gehäuse 3 aufgrund der Verdrehsicherung durch die Schraube 20 in der Stiftaufnahme 25 ortsfest bleibt.

Alternativ kann der Bund 12 der Halbschalen 11 auch durchgängig, d.h. ohne Zwischenräume 14 ausgeführt sein. Das Einklipsen der Halbschalen 11 in die ringförmige Ausnehmung 6 des Anschlußstutzens 4 ist dann aufgrund der flexiblen Verformung des elastisch ausgeführten Bundes 12 möglich.

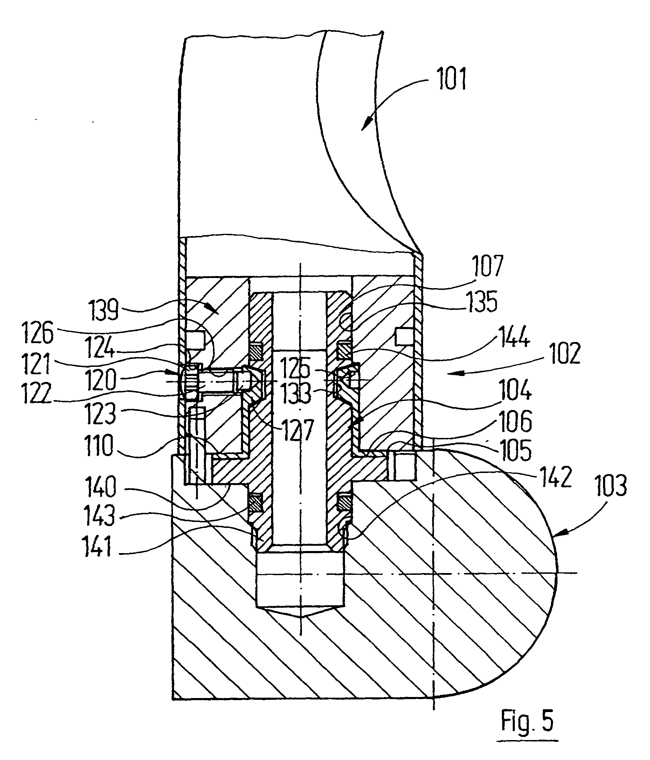

Anhand von Figur 5 wird nun ein alternatives Ausführungsbeispiel beschrieben, wobei Komponenten, die denjenigen des oben beschriebenen Ausführungsbeispiels entsprechen, jeweils um 100 erhöhte Bezugszeichen tragen und nicht nochmals im einzelnen beschrieben werden.

Bei dieser Ausführungsform umfaßt eine Steckverbindung 102 einen Anschlußstutzen 104, der fest mit einem Gehäuse 103 verbunden ist, sowie eine Aufnahme 135 für einen Steckzapfen 107. Die Aufnahme 135 ist hierbei Teil des Wasserauslaufs 101. Dazu weist letzterer eine unten eingelötete Hülse 139 auf, deren innere Mantelfläche die Aufnahme 135 vorgibt.

Der Anschlußstutzen 104 weist eine Umfangsstufe 105 auf, die analog zur Umfangsstufe 5 des ersten Ausführungsbeispiels (vgl. Fig. 1) einen Anschlag für den aufgestekkten Wasserauslauf 101 vorgibt. Ein O-Ring 144, der in eine zur Umfangsnut 37 des ersten Ausführungsbeispiels analogen Umfangsnut eingelegt ist, dichtet den Anschlußstutzen 104 gegen die Hülse 139 ab. Axial in das Gehäuse 103 hinein weist der Anschlußstutzen 104 in axialem Abstand von der Umgangsstufe 105 eine weitere Stufe 140 auf, über die er sich zu einem Montagezapfen 141 verjüngt. Letzterer ist in einer entsprechenden Gehäuseaufnahme 142 eingeschraubt und gegen diese durch einen O-Ring 143 abgedichtet.

Die Verhältnisse bei der Steckverbindung 102 der Figur 5 entsprechen denjenigen der Steckverbindung der Figur 1, wenn man gedanklich den Steckzapfen 107 sowie die Aufnahme 135 um 180° um eine zur Zeichenebene senkrechte horizontale Ebene spiegelt. Alle die axiale bzw. radiale Spielfreiheit der Steckverbindung 102 bewirkenden Komponenten, das heißt eine Lagerschale 110, eine Umfangsnut 133 im Steckzapfen 107 sowie der axiale Versatz der Mittelachse einer Schraube 120 bzw. eines Gewindes 126 gegenüber der Mittelachse einer Stiftaufnahme 125 bezogen auf die Längsachse der Steckverbindung 102 sind bezüglich dieser Ebene spiegelsymmetrisch. Obiger Axialversatz ist in Fig. 5 nur sehr gering und nicht, wie in Fig. 1, übertrieben groß dargestellt. Dadurch ergibt sich beim Einschrauben der Schraube 120 in die Stiftaufnahme 125 der Lagerschale 110 eine Umkehr der Kraftwirkung in der Weise, daß der Wasserauslauf 101 samt der Schraube 120 nach unten gezogen wird, wodurch analog zur Steckverbindung 2 der Figur 1 ein eventuell vorhandenes axiales Spiel des Steckzapfens 107 in der Aufnahme 135 eliminiert wird.

Die Eliminierung radialen Spiels erfolgt bei der Steckverbindung 102 analog zur Steckverbindung 2 der Figur 1.

Beim Verschwenken des Wasserauslaufs 101 im Gehäuse 103 dreht sich die Lagerschale 110 aufgrund der in sie eingreifenden Schraube 120 mit, während der Steckzapfen 107 ortsfest bleibt.

Bei einer weiteren nicht dargestellten Ausführungsform sind die Halbschalen ohne Feder-Lamellen ausgeführt. Die dem Bund axial gegenüberliegende Seite ist dann rotationssymmetrisch mit einem Profil ausgeführt, das demjenigen des oben beschriebenen Aufnahmeabschnitts entspricht. Die Stufe bzw. der Boden, die bei der in Zusammenhang mit der Figur 1 beschriebenen Ausführungsform auf den Aufnahmeabschnitt begrenzt waren, laufen dann vollständig in Umfangsrichtung der Lagerschale um.

## Patentansprüche

1. Sanitärarmatur mit
a) einem Gehäuse (3);
b) einem Wasserauslauf (1), der schwenkbar an dem Gehäuse (3) montiert ist,
c) einer Steckverbindung (2; 102), mittels welcher der Wasserauslauf (1) und das Gehäuse (3) im Endbereich des Wasserauslaufs zueinander schwenkbar ineinandergesteckt sind, und die aufweist:
ca) einen Steckzapfen (7; 107) mit rotationssymmetrischer Außenkontur;
cb) eine den Steckzapfen (7; 107) umgreifende Zapfenaufnahme;
cc) eine spielausgleichende Einrichtung (10; 110), die zumindest bereichsweise radial zwischen dem Steckzapfen und einem die Zapfenaufnahme enthaltenden Teil (8; 139) angeordnet ist;
cd) ein Fixierelement (20; 120), insbesondere eine Schraube (20), das durch eine radiale Öffnung in dem die Zapfenaufnahme enthaltenden Teil (8; 139) radial beweglich geführt ist;
wobei
d) der Steckzapfen (7; 107) und das die Zapfenaufnahme enthaltende Teil (8; 139) durch eine bezüglich der Achse der Steckverbindung (2; 102) radiale Kraftwirkung des Fixierelements auf eine Fläche der spielausgleichenden Einrichtung (10; 110) radial im wesentlichen spielfrei zueinander gelagert werden; und
e) die Steckverbindung (2; 102) einen Anschlag (5; 105) aufweist, der eine definierte axiale Steckposition des Steckzapfens (7; 107) in der Zapfenaufnahme vorgibt;
**dadurch gekennzeichnet, daß**
f) die spielausgleichende Einrichtung (10; 110) mindestens einen zur Achse der Steckverbindung (2; 102) geneigten Flächenbereich (25, 28, 30; 125, 128, 130) aufweist, der so mit dem Steckzapfen (7; 107) und dem Fixierelement (20; 120) zusammenwirkt, daß durch die radiale Kraftwirkung des Fixierelements (20; 120), die auf den mindestens einen Flächenbereich (25, 28, 30; 125, 128, 130) wirkt, der Steckzapfen (7; 107) gegen den Anschlag (5; 105) gespannt wird und der Steckzapfen (7; 107) und das die Zapfenaufnahme enthaltende Teil (8; 139) axial im wesentlichen spielfrei zueinander gelagert werden.

2. Sanitärarmatur nach Anspruch 1, **dadurch gekennzeichnet, daß** der Anschlag gebildet wird durch eine radial vorspringende Stufe (5; 105) am Steckzapfen (7; 107), die an einer Gegenfläche des die Zapfenaufnahme enthaltenden Teils (8; 139) anliegt.

3. Sanitärarmatur nach Anspruch 1 oder 2, **dadurch gekennzeichnet, daß** der geneigte Flächenbereich einen Flächenbereich innerhalb einer Aufnahme (25; 125) der spielausgleichenden Einrichtung (10; 110) für das Fixierelement (20; 120) umfaßt.

4. Sanitärarmatur nach Anspruch 3, **dadurch gekennzeichnet, daß** die Aufnahme (25; 125) eine Bohrung mit konischer Bodenfläche, der geneigte Flächenbereich der spielausgleichenden Einrichtung (10; 110) Teil der konischen Bodenfläche und die Achse der Aufnahme (25; 125) gegenüber dem Endabschnitt (23; 123) des Fixierelements (20; 120) bezogen auf die Achse der Steckverbindung (2; 102) axial versetzt ist.

5. Sanitärarmatur nach einem der vorhergehenden Ansprüche, **dadurch gekennzeichnet, daß** die spielausgleichende Einrichtung (10; 110) eine ringförmige Grundform hat und zwei Halbschalen (11; 111) umfaßt.

6. Sanitärarmatur nach Anspruch 5, **gekennzeichnet durch** mindestens eine sich in Umfangsrichtung der Halbschalen (11; 111) erstreckende verformbare Nocke (32), die an mindestens eine Halbschale (11; 111) angeformt ist.

7. Sanitärarmatur nach einem der vorhergehenden Ansprüche, **dadurch gekennzeichnet, daß** die spielausgleichende Einrichtung (10; 110) einen sich radial erstreckenden Bund (12) aufweist, der im Bereich des Anschlags (5; 105) zwischen dem Steckzapfen (7; 107) und dem die Zapfenaufnahme enthaltenden Teil (8; 139) aufgenommen ist.

8. Sanitärarmatur nach Anspruch 7, **dadurch gekennzeichnet, daß** der Bund (12) eine Mehrzahl von sich radial erstreckenden Lamellen-Segmenten (13) aufweist.

9. Sanitärarmatur nach einem der vorhergehenden Ansprüche, **dadurch gekennzeichnet, daß** die spielausgleichende Einrichtung (10; 110) mindestens ein Federelement (18) aufweist, das sich am Steckzapfen (7; 107) bzw. dem die Zapfenaufnahme enthaltenden Teil (8; 139) axial abstützt.

10. Sanitärarmatur nach Anspruch 9, **dadurch gekennzeichnet, daß** das Federelement mindestens eine einstückig an einem Grundkörper (15) der spielausgleichenden Einrichtung (10; 110) angeformte Feder-Lamelle (18) aufweist.

11. Sanitärarmatur nach einem der vorhergehenden Ansprüche, **dadurch gekennzeichnet, daß** die Zapfenaufnahme (8) im Gehäuse (3) der Sanitärarmatur ausgebildet ist.

12. Sanitärarmatur nach einem der Ansprüche 1 bis 10, **dadurch gekennzeichnet, daß** die Zapfenaufnahme (108) im Wasserauslauf (101) der Sanitärarmatur ausgebildet ist.

## Revendications

1. Robinetterie sanitaire avec
a) un corps de robinetterie (3) ;
b) une sortie d'eau (1), qui est montée à pivotement sur le corps (3),
c) un assemblage à emboîtement (2 ; 102), au moyen duquel la sortie d'eau (1) et le corps (3) sont emboîtés l'un dans l'autre à pivotement l'un par rapport à l'autre dans la région terminale de la sortie d'eau, et qui présente :
ca) un pivot d'emboîtement (7 ; 107) ayant un contour extérieur à symétrie de révolution ;
cb) un logement de pivot s'engageant autour du pivot d'emboîtement (7 ; 107) ;
cc) un équipement de compensation de jeu (10 ; 110), qui est disposé au moins pour région radialement entre le pivot d'emboîtement et un élément (8 ; 139) contenant le logement de pivot ;
cd) un élément de fixation en position (20 ; 120), notamment une vis (20) qui, par une ouverture radiale, est guidée à déplacement radial dans l'élément (8 ; 139) contenant le logement de pivot ;
d) le pivot d'emboîtement (7 ; 107) et l'élément (8 ; 139) contenant le logement de pivot étant montés radialement essentiellement sans jeu l'un par rapport à l'autre, par l'action d'une force radiale - par rapport à l'axe de l'assemblage à emboîtement (2 ; 102) - de l'élément de fixation en position sur une surface de l'équipement de compensation de jeu (10 ; 110) ; et
e) l'assemblage à emboîtement (2 ; 102) présentant une butée (5 ; 105) qui prescrit une position axiale définie d'emboîtement du pivot d'emboîtement (7 ; 107) dans le logement de pivot ;
**caractérisée en ce que**
f) l'équipement de compensation de jeu (10 ; 110) présente au moins une région de surface (25, 28, 30 ; 125, 128, 130) inclinée par rapport à l'axe de l'assemblage à emboîtement (2 ; 102), région qui coopère avec le pivot d'emboîtement (7 ; 107) et l'élément de fixation en position (20 ; 120) de telle sorte que, par l'action de la force radiale de l'élément de fixation en position (20 ; 120) - laquelle agit sur ladite au moins une région de surface (25, 28, 30 ; 125, 128, 130), le pivot d'emboîtement (7 ; 107) est serré contre la butée (5 ; 105), et le pivot d'emboîtement (7 ; 107) et l'élément (8 ; 139) contenant le logement de pivot sont montés axialement essentiellement sans jeu l'un par rapport à l'autre.

2. Robinetterie sanitaire selon la revendication 1, **caractérisée en ce que** la butée est formée par un gradin (5 ; 105) radialement saillant sur le pivot d'emboîtement (7 ; 107), gradin qui s'applique contre une surface antagoniste de l'élément (8 ; 139) contenant le logement de pivot.

3. Robinetterie sanitaire selon la revendication 1 ou 2, **caractérisée en ce que** la région de surface inclinée comprend une région de surface à l'intérieur d'un logement (25 ; 125) de l'équipement de compensation de jeu (10 ; 110) pour l'élément de fixation en position (20 ; 120).

4. Robinetterie sanitaire selon la revendication 3, **caractérisée en ce que** le logement (25 ; 125) est un perçage à surface de fond conique, la région de surface inclinée de l'équipement de compensation de jeu (10 ; 110) fait partie de la surface de fond conique, et l'axe du logement (25 ; 125) est axialement décalé, relativement à l'axe de l'assemblage à emboîtement (2 ; 102), par rapport à la partie terminale (23 ; 123) de l'élément de fixation en position (20 ; 120).

5. Robinetterie sanitaire selon l'une des revendications précédentes, **caractérisée en ce que** l'équipement de compensation de jeu (10 ; 110) possède une forme de base annulaire et comprend deux demi-coques (11 ; 111).

6. Robinetterie sanitaire selon la revendication 5, **caractérisée par** au moins un bossage déformable (32) s'étendant dans la direction circonférentielle des demi-coques (11 ; 111), qui est formé sur au moins une demi-coque (11 ; 111).

7. Robinetterie sanitaire selon l'une des revendications précédentes, **caractérisée en ce que** l'équipement de compensation de jeu (10 ; 110) présente un collet (12) s'étendant radialement, qui est reçu dans la région de la butée (5 ; 105) entre le pivot d'emboîtement (7 ; 107) et l'élément (8 ; 139) contenant le logement de pivot.

8. Robinetterie sanitaire selon la revendication 7, **caractérisée en ce que** le collet (12) présente une multiplicité de segments formant lamelles (13) s'étendant radialement.

9. Robinetterie sanitaire selon l'une des revendications précédentes, **caractérisée en ce que** l'équipement de compensation de jeu (10 ; 110) présente au moins un élément de ressort (18), qui s'appuie axialement contre le pivot d'emboîtement (7 ; 107) ou respectivement contre l'élément (8 ; 139) contenant le logement de pivot.

10. Robinetterie sanitaire selon la revendication 9, **caractérisée en ce que** l'élément de ressort présente au moins une lamelle de ressort (18) solidairement formée sur un corps de base (15) de l'équipement de compensation de jeu (10 ; 110).

11. Robinetterie sanitaire selon l'une des revendications précédentes, **caractérisée en ce que** le logement de pivot (8) est formé dans le corps (3) de la robinetterie sanitaire

12. Robinetterie sanitaire selon l'une des revendications 1 à 10, **caractérisée en ce que** le logement de pivot (108) est formé dans la sortie d'eau (101) de la robinetterie sanitaire.

## Claims

1. Sanitary fitting having
a) a casing (3);
b) a water outlet (1) which is pivotably installed on said casing (3);
c) a push-in connection (2; 102), by means of which the water outlet (1) and the casing (3) are pushed into one another in the end region of the water outlet so as to be pivotable in relation to one another, and which has:
ca) a push-in peg (7; 107) with a rotationally symmetrical outer contour;
cb) a peg receptacle which engages round said push-in peg (7; 107);
cc) an arrangement (10; 110) which compensates for play and which is disposed, at least in certain regions, radially between the push-in peg and a part (8; 139) containing the peg receptacle;
cd) a fixing element (20; 120), in particular a screw (20), which is guided in a radially movable manner through a radial opening in the part (8; 139) containing the peg receptacle;
wherein
d) the push-in peg (7; 107) and the part (8; 139) containing the peg receptacle are mounted so as to be radially substantially free from play in relation to one another as a result of an action of force, which is radial with respect to the axis of the push-in connection (2; 102), of the fixing element on one surface of the arrangement (10; 110) that compensates for play;
and
e) the push-in connection (2; 102) has a stop (5; 105) which determines a defined axial pushed-in position of the push-in peg (7; 107) in the peg receptacle;
**characterised in that**
f) the arrangement (10; 110) that compensates for play has at least one surface region (25, 28, 30; 125, 128, 130) which is inclined in relation to the axis of the push-in connection (2; 102) and which cooperates with the push-in peg (7; 107) and the fixing element (20; 120) in such a way that, as a result of the radial action of force of the fixing element (20; 120), which action of force acts on the surface region (25, 28, 30; 125, 128, 130), of which there is at least one, the push-in peg (7; 107) is clamped against the stop (5; 105) and the said push-in peg (7; 107) and the part (8; 139) containing the peg receptacle are mounted so as to be axially substantially free from play in relation to one another.

2. Sanitary fitting according to claim 1, **characterised in that** the stop is formed by a radially projecting step (5; 105) on the push-in peg (7; 107), which step rests against a counterface on the part (8; 139) containing the peg receptacle.

3. Sanitary fitting according to claim 1 or 2, **characterised in that** the inclined surface region comprises a surface region inside a receptacle (25; 125) for the fixing element (20; 120) in the arrangement (10; 110) that compensates for play.

4. Sanitary fitting according to claim 3, **characterised in that** the receptacle (25; 125) is a bore with a conical bottom surface, the inclined surface region of the arrangement (10; 110) that compensates for play is part of said conical bottom surface, and the axis of the receptacle (25; 125) is axially offset in relation to the end section (23; 123) of the fixing element (20; 120), referred to the axis of the push-in connection (2; 102).

5. Sanitary fitting according to one of the preceding claims, **characterised in that** the arrangement (10; 110) that compensates for play has an annular basic shape and comprises two half-shells (11; 111).

6. Sanitary fitting according to claim 5, **characterised by** at least one deformable dog (32) which extends in the peripheral direction of the half-shells (11; 111) and is moulded onto at least one half-shell (11; 111).

7. Sanitary fitting according to one of the preceding claims, **characterised in that** the arrangement (10; 110) that compensates for play has a radially extending collar (12) which is received in the region of the stop (5; 105) between the push-in peg (7; 107) and the part (8; 139) containing the peg receptacle.

8. Sanitary fitting according to claim 7, **characterised in that** the collar (12) has a plurality of radially extending lamella segments (13).

9. Sanitary fitting according to one of the preceding claims, **characterised in that** the arrangement (10; 110) that compensates for play has at least one spring element (18) which is axially supported on the push-in peg (7; 107) or the part (8; 139) containing the peg receptacle.

10. Sanitary fitting according to claim 9, **characterised in that** the spring element has at least one spring lamella (18) which is moulded, in one piece, onto a base member (15) of the arrangement (10; 110) that compensates for play.

11. Sanitary fitting according to one of the preceding claims, **characterised in that** the peg receptacle (8) is constructed in the casing (3) of the sanitary fitting.

12. Sanitary fitting according to one of claims 1 to 10, **characterised in that** the peg receptacle (108) is constructed in the water outlet (101) of the sanitary fitting.
